# EUROPEAN PATENT APPLICATION

(11) **EP 1 293 907 A1**
(43) Date of publication of application: **19.03.2003**
(21) Application number: 00915555.7
(22) Date of filing: 17.04.2000
(51) Int. Cl.: G06F 13/00, G06F 15/00, G06F 17/30, G06F 9/445, G06F 3/00

(54) **METHOD FOR DISPLAYING BROWSER SCREEN, DISPLAY SYSTEM, AND RECORDING MEDIUM**

(71) Applicant: Hotto Link, Inc., Shibuya-ku, Tokyo 151-0053 (JP)
(72) Inventor: UCHIYAMA, Koki Digit Co., Ltd., Shibuya-ku, Tokyo 151-0053 (JP)
(74) Representative: Lorenz, Werner, Dr.-Ing.
(86) International application number: JP0002480
(87) International publication number: WO01080018

(57) **Abstract**

A method for displaying browser screen comprises a step for loading software including a program for displaying an area including, e.g., a menu bar and a tool bar where button(s) for indicating work are arranged and a main window on a computer, and a step for embedding in the browser additional function software including a program that places additional function button(s) and/or small area(s) different from the contents to be displayed by the browser in said area where the button(s) for indicating work is(are) arranged and also makes said additional function button(s) and/or small area(s) always displayed in the browser screen.

## Description

### Field of the Invention

The present invention relates to a browser screen display method, display system, and recording medium. The present invention relates especially to browser screen display method, display system and recording medium that enhances utilization rate of the software by embedding such software in the basic parts of the browser screen, such as an area including, e.g., a menu bar and a tool bar where buttons for indicating a work are arranged.

### Description of the Prior Art

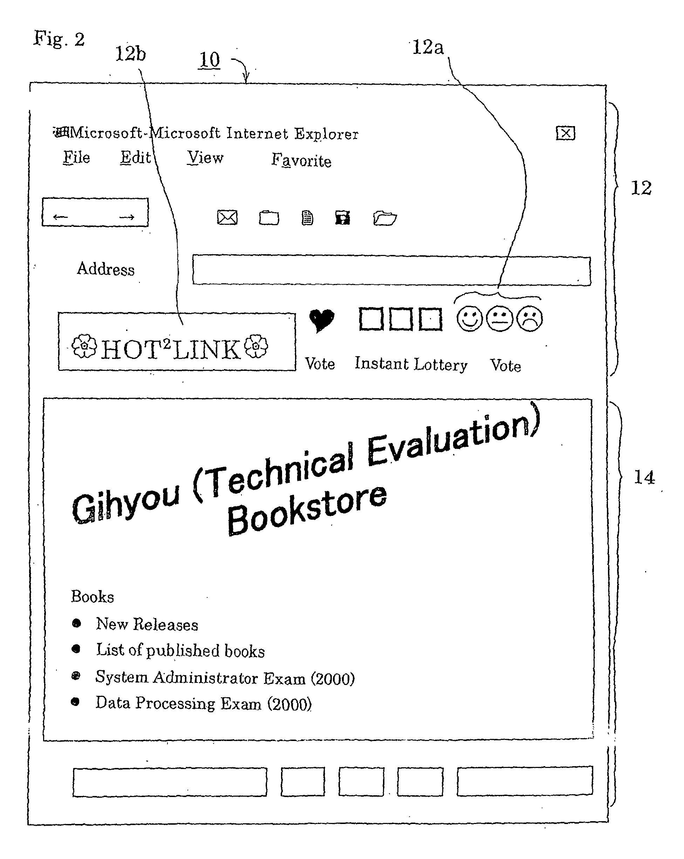

Future computer use is expected to be done mostly using a browser as a base. A browser is software to seek the content of a file, for example, Internet Explorer™ (registered trademark of Microsoft Corporation) and Netscape Navigator™ (registered trademark of Netscape Communications Corporation) are famous software developed for viewing a variety of home pages through Internet. The browser screen is schematically equipped with work instruction area including, e.g., a menu bar, a tool bar and a main window. Figure 2 is an explanatory view of a home page opened using Internet Explorer. Browser screen 10 has a work instruction area 12 in the upper part and a main window 14 that displays the content of the browser set up.

Search engines such as Yahoo™ (registered trademark of Yahoo Japan Corporation) are accessed by many users every day because sectoral lists of Internet useable international World Wide Web (WWW) servers are easily viewed. Targeting on these users, main window of Yahoo home page is equipped with small display areas for advertisements and various advertisements are displayed in these spaces. Number of accesses made to Yahoo is enormous and it is attracting attention as a new media alternative advertising medium to such as broadcasting and newspaper. However, method of posting advertisement on the small display area set up in the Internet home page has a flaw that the advertisement cannot be seen unless users visit the Internet home page.

Moreover, a service to compile the number of accesses made to the Internet home page and release the ranking currently exists. However, this method has a flaw that it does not reflect evaluation on the content. There also exists a service that is equipped with a voting button in the main window, have users vote for evaluation of the home page, and release the ranking. Though this method also has a flaw, operational problem, that in order to vote for the home page, it needs to move to the voting home page and launch a different application for voting.

Furthermore, search engines on the Internet display search results as a home page. This has a flaw that after viewing home page outputted as a result and viewing a different home page, it needs to go back to the search result home page every time.

The present invention resolved flaws and problems of the above-mentioned prior art, and aim to provide method for displaying browser screen, display system, and recorded medium that can enhance operationality and utilization rate of variety of software used in the browser.

### Disclosure of the Invention

The first aspect of the present invention is a method for displaying browser screen to accomplish the above-mentioned aims, and provides the method for displaying browser screen characterized in that it comprises a step for loading software(s) including a program for displaying an area including, e.g., a menu bar and a tool bar where buttons for indicating a work are arranged and a main window on a computer, and a step for embedding in the browser additional function software(s) including a program that displays additional function button(s) and/or small area(s) different from the contents to be displayed by a browser in the area.

Since the additional function button(s) and/or small area(s) is(are) displayed not in the main window of the browser but in an area where the button(s) for indicating work is(are) arranged, additional functions and items in the small area could be displayed consistently in the browser screen of user's terminal. In other words, moving between home pages is unnecessary, also, the page will not disappear when moving between home pages.

The present invention described in claim 2, in the method for displaying browser screen described in claim 1, is characterized in that when the additional function software is activated in the user's terminal, it comprises a step to follow the program embedded in the additional function software and transmit user's response to a specified monitoring server connected through communication lines.

By following the program embedded in the additional function software and automatically transmitting the user's response to the specified monitoring server, it is capable of objectively monitoring the utilization rate of the additional function software.

The present invention described in claim 3, in the method for displaying browser screen described in claim 1 or 2, is characterized in that it comprises a step to change the content displayed by means of the additional function software by having the monitoring server periodically or randomly access to the user's terminal through the communication lines, or the user's terminal access to the monitoring server.

By changing the content displayed by means of the additional function software by having the monitoring server periodically or randomly access to the user's terminal through the communication lines, or the user's terminal access to the monitoring server, the content can always be innovative and attractive. Moreover, it is capable of changing information displayed on the user's terminal to match with an individual's taste based on the data transmitted to the monitoring server.

The present invention described in claim 4, in the method for displaying browser screen described in one of claims 1∼3, wherein the additional function button(s) and /or small area(s) are to compile the evaluation results by the users who have actually seen the home page, and is characterized in that it comprises a step to embed into browser an evaluation software that can display small area to input words that would be keywords for search to describe characteristics of the home page and present home page evaluation means in the area where the buttons for indicating work are arranged or in a small window brought up on the computer, a step to input words that would be search keywords in the browser or the small area of said small window, a step to evaluate present home page using the home page evaluation means, and a step to retain the evaluation of the home page in connection with the keyword concerned in the evaluation software embedded in the browser, and transmit the same to the monitoring server.

The present embodiment uses the method for displaying browser screen in accordance with the present invention to compile evaluation of the users who have actually seen the home page. Specifically, it embeds into the browser the evaluation software that displays the small area for inputting words that would be search keywords and the present home page evaluation means in the area where the buttons for indicating work are arranged or in the small window brought up.

There, the user actually inputs words that would be search keywords to describe characteristics of the home page in the browser or the small area in the small window, and evaluates said home page by using home page evaluation means, for example, two "good" and "bad" radio buttons. Evaluation software retains the evaluation of the home page inputted by the user in accordance with the keywords also inputted by the user, and at the same time, transmits the evaluation result to the monitoring server.

The present invention described in claim 5, in the method for displaying browser screen described in one of claims 1∼3, is characterized in that the additional small area is designed to display advertisement at the user's terminal.

By placing advertisements in the area where buttons for indicating work are arranged on the user's terminal, in other words, additional small area provided in the place where is always displayed in said browser, it increases opportunity for the advertisement to be seen by the user.

The present invention described in claim 6, in the method for displaying browser screen described in one of claims 1 or 2, is characterized in that the additional function buttons and/or small area is for the search engine to search for various home pages.

Searching is done at the area where the buttons for indicating work are arranged on the user's terminal, in other words, the additional buttons and/or the small area provided in the places always displayed in said browser. Search result is also displayed in the area where the buttons for indicating work are arranged likewise. Generally the area where the buttons for indicating work are arranged has 2∼4 lines, and in a case the search result exceeds displayable number of lines, it is displayed as a pull-down menu, for example.

The present invention described in claim 7, in the method for displaying browser screen described in claim 4, is characterized in that it comprises a step to embed in said browser an announcement software that displays message to announce winning of the sweepstake on the moment when the user votes in the browser or a small window, a step to automatically select a winner when it is recognized that the user's terminal has done evaluating the home page, and a step to transmit a signal to the user who has won and displays so on said user's terminal wherein the user is encouraged to voluntary vote.

The present embodiment is to induce the users to voluntarily vote when evaluating various home pages using the method for displaying browser screen of the present invention. Specifically, it embeds the announcement software into the browser, and when it is recognized that the home page evaluation has been done, it automatically selects the winner. Then, when the user wins, it transmits the signal that the user has won and displays so on said user's terminal on the moment. With the attraction of the instant lottery, users will voluntarily vote.

The present invention described in claim 8, in the method for displaying browser screen described in claim 1, is characterized in that it comprises a step to embed in a browser a retaining software that can retain a history of accessed home pages in the browser of user's own terminal, a step to transmit a history information kept in the browser of other user's terminal to the user's terminal through the communication lines when the user demands the history information of other user's terminal, a step to display the transmitted history information in the area where the buttons for indicating a work are arranged or the small window of the user's terminal and have the user choose one of home pages, and a step to access the chosen home page by referring to the URL whereby it reaches a home page having a good content in a short time with the user's access history information of home pages recorded in other users' terminals as a pilotage.

The present embodiment, by using the method for displaying browser screen, reaches a home page having a good content in a short time with using the access history information of home pages recorded in other users' terminals, for example, friend's and specialist's terminals, as a pilotage.

Specifically, when there is the demand of the history information from one user's terminal, it transmits the history information kept in other user's terminal to the former. The transmitted history information is displayed in the browser of the user's terminal. The user of said user's terminal chooses one of the home pages. From that, the CPU of the user's terminal accesses the chosen home page by referring to the URL.

The present invention described in claim 9, in the method for displaying browser screen described in claim 8, is characterized in that the retaining software can retain URL history of accessed home pages together with genre information, personal names, keywords, and other collateral information characterizing said home page, moreover, when displaying the history information in the browser or small window of the user's terminal, the collateral information related to said history information is also displayed.

The information kept in the other user's terminal is transmitted to the user's terminal and displayed in the area where the buttons for indicating a work are arranged or the small window, and the user is to choose one of the home pages. At that time, the genre information, personal names, keywords, and other collateral information are helpful when choosing appropriate home page.

The second aspect of the present invention is the browser screen display system. It provides a browser screen display system comprising a memory that records browser display software, a browser displaying control means inside CPU that brings out the browser display software from the memory and displays at least an area including, e.g., a menu bar and a tool bar where buttons for indicating a work are arranged and a main window on a monitor screen by following said browser display software, and an additional function displaying means inside CPU that displays additional function button(s) and/or small area(s), that differ(s) in content with what is to be displayed by the browser, in the area where the buttons for indicating a work are arranged.

A memory in the computer records the browser display software. The browser displaying control means inside CPU brings out the browser display software from the memory and displays at least the area including, e.g., the menu bar and tool bar where the buttons for indicating a work are arranged and the main window on the monitor screen by following said browser display software. The additional function displaying means inside CPU that displays additional function button(s) and/or the small area(s), that differ(s) in the content with what is to be displayed in the browser, in the area where the buttons for indicating a work are arranged, in other words, place(s) where is(are) always seen on the browser screen. In this manner, it enhances operationality and utilization rate. If necessary, it is capable of displaying additional function buttons and/or small area in a small window brought up and display in there. The present embodiment covers a concept that includes those variations.

The present invention described in claim 11, in the system for displaying browser screen described in claim 10, is characterized in that, when the additional function software is activated at the user's terminal, it is constructed to follow the program embedded in said additional function software and transmit the user's response to a specified monitoring server connected through communication lines.

The present invention described in claim 12, in the system for displaying browser screen described in claim 10 or 11, is characterized in that the content displayed by the additional function software is to be changed by having the monitoring server periodically or randomly access to the user's terminal through the communication lines, or by having the user's terminal access to the monitoring server.

The present invention described in claim 13, in the system for displaying browser screen described in one of the claims 10∼12, is characterized in that it further comprises search keyword recognition control means that recognize(s) an input in the small area as a search keyword to show characteristics of the home page, evaluation recognition means that recognize(s) a click on the additional function button as an evaluation on said accessed home page, evaluation result retention means that retain(s) search result in connection with keyword in the evaluation software embedded in the browser and also transmit(s) the search result to the monitoring server, and ranking process means that compile(s) the evaluation results retained by the evaluation result retention means and releases a ranking or statistical processes by the keywords whereby whether the home page is good or bad is decided from the evaluation results of the users who actually saw the home page.

The present invention described in claim 14, in the system for displaying browser screen described in one of the claims 10∼13, is characterized in that it further comprises advertisement presentation means that present(s) an advertisement to the user in the small area.

The present invention described in claim 15, in the system for displaying browser screen described in the claim 10 or 12, is characterized in that it further comprises search engine assignment means that assign(s) search engine to search various home pages in the additional function buttons and/or the small area.

The present invention described in claim 16, in the system for displaying browser screen described in claim 13, is characterized in that it further comprises instant lottery formation means that forms message window(s) in the area where the buttons indicating a work are arranged or the small window and announce(s) winning of the sweepstake on the moment when the user votes whereby it induces the user to voluntarily vote with an attraction to the instant lottery.

The present invention described in claim 17, in the system for displaying browser screen described in claim 10, is characterized in that it further comprises history information retention means that follow(s) the retention software embedded in the user's terminal and retain(s) a history of accessed home pages in the browser of user's own terminal, history information acquisition means that transmit(s) the history information kept in the browser of other user's terminal to the user's terminal through the communication lines when the user demands the history information of other user's terminal, history information display means that display(s) the transmitted history information in the area where the buttons for indicating a work are arranged or the small window of the user's terminal and have(has) the user choose one of home pages, and chosen home page access means that access(s) the chosen home page by referring to the URL whereby it reaches a home page having a good content in a short time with using the access history information of home pages recorded in other users' terminals as a pilotage.

The present invention described in claim 18, in the system for displaying browser screen described in claim 17, is characterized in that the retention software can retain URL history of accessed home pages together with genre information, personal names, keywords, and other collateral information characterizing said home page, moreover, when the displaying history information in the browser or small window of the user's terminal, the collateral information related to said history information is also displayed.

The third aspect of the present invention provides a recorded medium that can be red by computer with a recorded program to execute the method for displaying browser screen in accordance with the first aspect of the present invention.

### Brief Explanation of the Drawings

Figure 1 is a flow chart showing an embodiment of the method for displaying browser screen related to the first aspect of the present invention.

Figure 2 is an explanatory diagram of an opened home page of "Gihyou (Technical Evaluation) Bookstore" with Microsoft Internet Explorer.

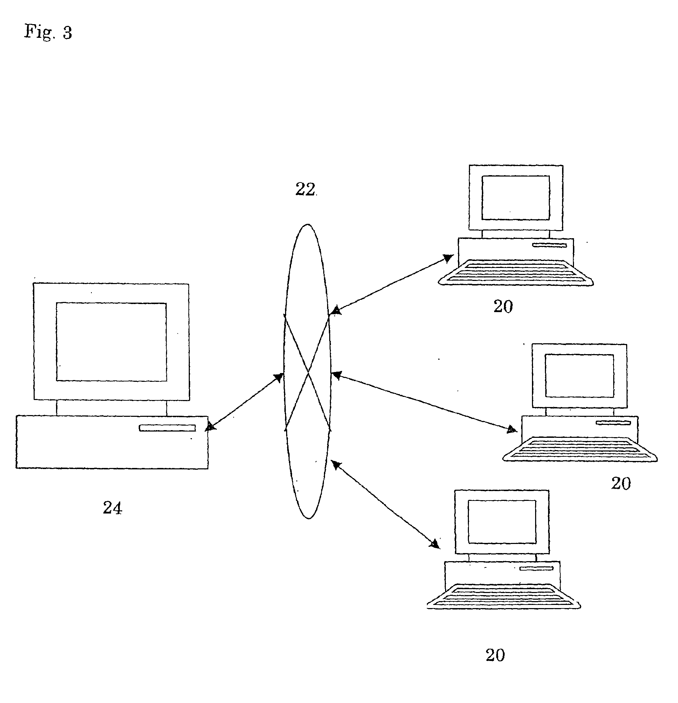

Figure 3 is a block diagram of the browser screen display system of the present invention constructed to automatically transmit the user's responses to the monitoring server.

Figure 4 is a flow chart of the method for displaying browser screen of the present invention applied to the home page evaluation method.

Figure 5 is a flow chart of the method for displaying browser screen of the present invention applied to the voting inducement method that would make the home page evaluation method of Fig. 4 more done voluntarily by users.

Figure 6 is a flow chart the method for displaying browser screen of the present invention applied to the URL reference method.

Figure 7 is a block diagram showing an embodiment of the browser screen display system related to the second aspect of the present invention.

Figure 8 is a block diagram showing an embodiment of the browser screen display system structured to change the content of the additional function software display by having the monitoring server accessing the user's terminal.

Figure 9 is a block diagram of the browser screen display system of the present invention applied to the home page evaluation system.

Figure 10 is a block diagram of the browser screen display system of the present invention applied to the home page advertisement system.

Figure 11 is a block diagram of the browser screen display system of the present invention applied to the home page search system.

Figure 12 is a block diagram of an embodiment that has an instant lottery related to the present invention added to the home page evaluation system of Figure 9.

Figure 13 is a block diagram of the browser screen display system of the present invention applied to the home page reference system.

Figure 14 is an explanatory diagram of the browser displayed in a tree view of history information retained at the user's terminal.

### Description of the Preferred Embodiments

A detailed explanation of the shown best mode for carrying out the method for displaying browser screen, display system, and recorded medium of the present invention is made in the following.

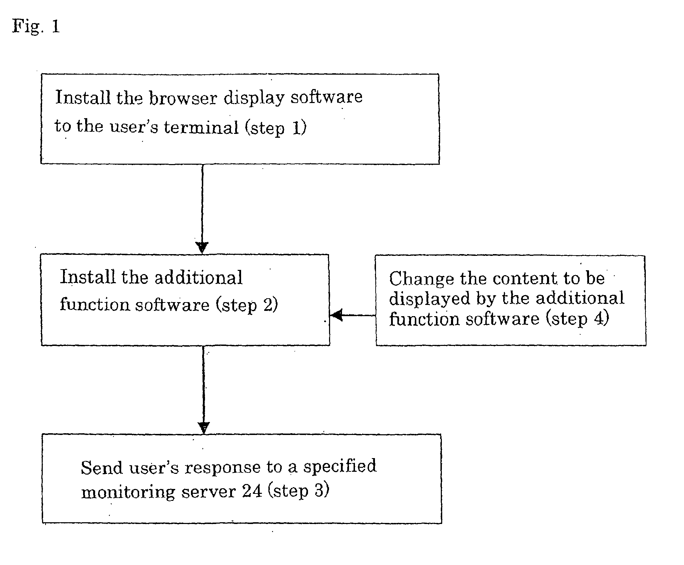

Figure 1 is a flow chart showing an embodiment of the method for displaying browser screen related to the first aspect of the present invention.

The method for displaying browser screen comprises a step to embed browser display software into the computer (step 1) and a step to embed additional function software into the browser (step 2).

The browser includes a program for displaying an area 12 including, e.g., a menu bar and a tool bar where buttons for indicating a work are arranged and a main window 14 in the browser screen 10. Figure 2 is an explanatory diagram of an opened home page of "Gihyou (Technical Evaluation) Bookstore" with Microsoft Internet Explorer. As shown in the figure, the browser screen 10 contains an area where buttons for indicating a work are arranged 12 at the upper part and a main window 14 that displays the content of the browser. In the area where buttons for indicating a work are arranged 12, additional function button(s) 12a and/or small area(s) 12b that differ in content with what is to be displayed in the browser are set up. By having the additional function button(s) 12a and/or small area(s) 12b in the area where buttons for indicating a work are arranged 12, the present invention is characterized in that they are always displayed in the browser screen at the user's terminal.

The additional functions are always displayed on the browser screen at the user's terminal for additional function button(s) 12a and/or small area(s) 12b are displayed not in the main window 14 of the browser but in the area where buttons for indicating a work are arranged 12. Therefore, it is unnecessary to move between home pages or to visit one of the home pages in order to indicate a particular work each and every time.

The preferred embodiment shown in Figure 1, when additional function software is activated at the user's terminal 20, follows the program embedded in said additional function software and transmits user's response to a specified monitoring server 24 connected through communication lines 22 (step 3).

A program embedded in the additional function software is followed and user's responses, for example, an evaluation of home page to be mentioned and a choice of favorite home page, are automatically transmitted to the monitoring server. In this manner, the monitoring server 24 can objectively monitor the utilization rate of the additional function software.

Moreover, the preferred embodiment shown in the figure is characterized in that it comprises a step to change the content displayed by means of the additional function software by having the monitoring server 24 periodically or randomly access to the user's terminal 20 through the communication lines, or the user's terminal 20 access to the monitoring server 24.

By changing the content displayed by means of the additional function software by having the monitoring server 24 periodically or randomly access to the user's terminal 20 through the communication lines, or the user's terminal access to the monitoring server, the content can always be innovative and attractive. Moreover, it is capable of changing information displayed on the user's terminal to match with an individual's taste based on the data transmitted to the monitoring server.

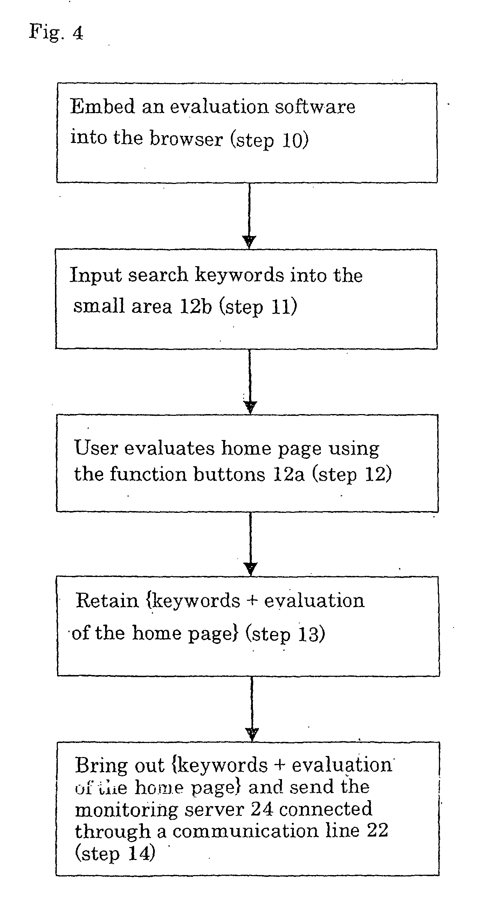

The method for displaying browser screen of the present invention can be applied to the home page evaluation method that decide good or bad about a home page by compiling evaluation results from the users who have actually seen the home page (see Figure 4). This home page evaluation method is structured with a step to embed an evaluation software into the area where buttons for indicating work are arranged 12 of the browser (step 10), a step to input search keywords into the small area 12b in the area where buttons for indicating work are arranged 12 (step 11), a step to have the user evaluate said home page using the function buttons 12a in the area where buttons for indicating work are arranged 12 (step 12), and a step to retain the evaluation of the home page in connection with keywords in the evaluation software and transmit the evaluation result to the monitoring server (step 13). In the case where it requires more space, it is capable of providing additional buttons, bring out the small window, and display the function buttons 12a and the small area 12b.

The user can evaluate the home page as he/she is looking at by using the function buttons 12a and the small area 12b provided in the area where the buttons for indicating work are arranged 12 of the browser screen 10 at his/her user's terminal. This is capable because the function buttons 12a and the small area 12b are provided in the basic place of browser screen 10, in other words, in the area where the buttons for indicating work are arranged 12 that is always displayed even when the display of the small area 12b changes.

Regarding the actual evaluation, the user first inputs words that would be search keywords to describe characteristics of the home page he/she is looking at into the small area 12b. In the embodiment of Figure 2, "bookstore" and "information processing" are inputted. Of course, in a system that knows the genre of said home page without getting help from the user, it is capable of omitting the set up of the small area 12b and the input of search keyword by the user. Secondly, the user evaluates said home page by using the function buttons 12a which is a home page evaluation means, for example, by clicking one of "circle (meaning good)", "triangle (meaning neither good nor bad)", and "bad mark (meaning bad)" buttons. This evaluation is retained in the evaluation software embedded in the browser in connection with the keyword.

The preferred embodiment shown in the figure, when the additional function software is activated at the user's terminal 20, follows the program embedded in said additional function software, brings out the user's response, in this case, search keywords and home page evaluation, from the evaluation software, and transmits the user's response to a specified monitoring server 24 connected through a communication line 22 (step 14).

From this, the monitoring server 24 is able to provide each home page's evaluation statistics and ranking. In a case where the user wants to search a home page with a good content, the monitoring server 24 can be developed to provide said evaluation statistics and ranking to the users. Of course, the monitoring server 24 can objectively monitor the utilization rate of the additional function software.

The method for displaying browser screen of the present invention can be applied to the advertising method that effectively advertises at the user's terminal. This advertising method is to use the additional small area 12b set up in the area where the buttons for indicating work are arranged 12 as an advertisement space.

By placing advertisements in an area where the buttons for indicating work are arranged 12 on the user's terminal, in other words, the additional small area 12b provided in the parts always displayed in said browser screen 10, it increases opportunity for the advertisement to be seen by the user. In this case, the function button 12a can be used as "open" button for users who wants to access the URL of that advertisement.

The method for displaying browser screen of the present invention can be applied to the home page search method that searches for various home pages. This search method uses the additional small area 12b provided in the area where the buttons for indicating work are arranged 12 as an area to input keywords for search. In this case, the function button 12a is used as "search" button to execute the search.

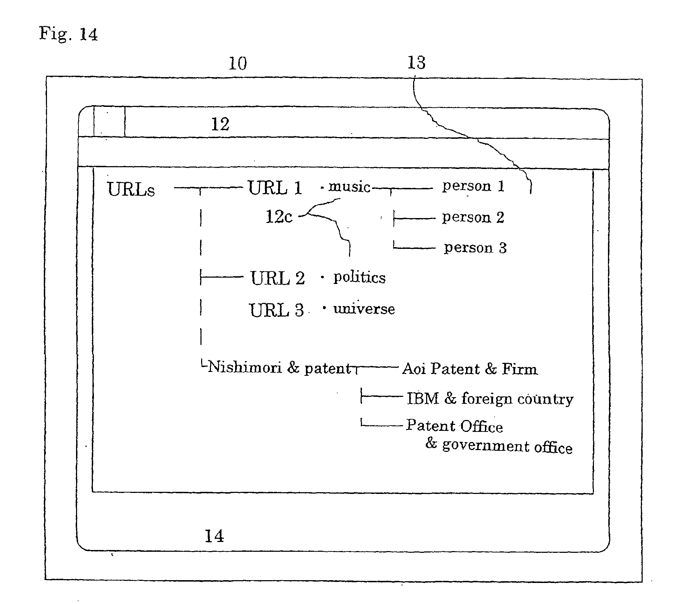

Searching is done at the area where the buttons for indicating work are arranged 12 at the user's terminal, in other words, at the additional small area 12b provided in the places always displayed in said browser screen 10. Search result is also displayed in the area where the buttons for indicating work are arranged 12 likewise. Generally, the area where buttons for indicating work are arranged 12 has 2∼4 lines, and in a case the search result exceeds displayable number of lines, it is displayed in the small window or as a pull-down menu 13 as shown in the Figure 14, for example. In this manner, candidate home pages are displayed in the area where the buttons for indicating work are arranged 12 or the small window / pull-down menu 13. Therefore, in a case the user continuously accesses a number of home pages, he/she does not have to go back and forth between the home pages and can continuously access home pages easily.

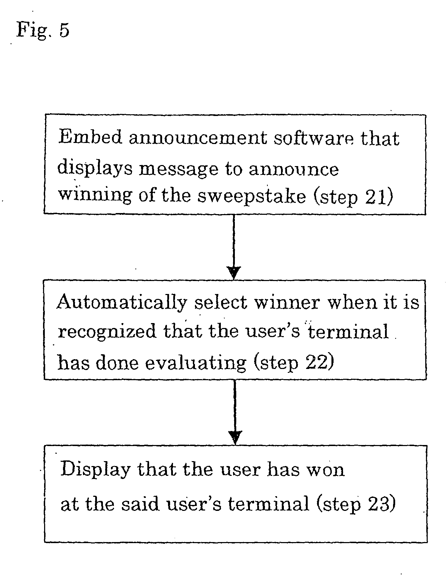

The method for displaying browser screen of the present invention can be applied to the voting inducement method that would make the home page evaluation method more done voluntarily by users (see Figure 5). This voting inducement method comprises a step to embed in said browser an announcement software that displays message to announce winning of the sweepstake on the moment when the user votes (step 21), a step to automatically select winner when it is recognized that the user's terminal has done evaluating the home page (step 22), and a step to display that the user has won at said user's terminal (step 23).

The present embodiment is to induce users to voluntarily vote when evaluating various home pages using the method for displaying browser screen of the present invention. Specifically, it embeds an announcement software into the browser, and when it is recognized that the home page evaluation has been done, the monitoring server 24 automatically selects a winner. Then, when the user wins, it transmits a signal to the user's terminal 20 that the user has won through the communication line 22 and displays so on said user's terminal on the moment. The instant lottery is so attractive that it is sold as single lottery. With the attraction of the instant lottery, the users will voluntarily vote.

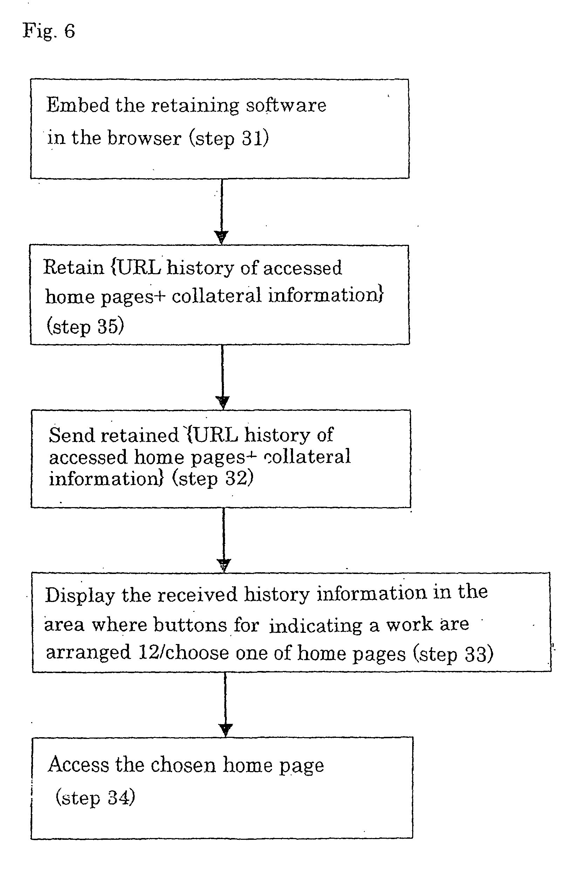

The method for displaying browser screen of the present invention can be applied to the URL reference method that can find good home pages in a short time (see Figure 6). This URL reference method comprises a step to embed in a browser a retaining software that can retain a history of accessed home pages in the browser of user's own terminal 20 (step 31), a step to transmit a history information kept in the browser of other user's terminal 20 to the user's terminal 20 through the communication line 22 when the user demands history information of other user's terminal 20 (step 32), a step to display the transmitted history information in the area where the buttons for indicating a work are arranged 12 or the small window of the user's terminal 20 and have the user choose one of home pages (step 33), and a step to access the chosen home page by referring to the URL (step 34). In this manner, it is capable of reaching a home page having a good content in a short time with considering an access history of home pages recorded in other users' terminals as a pilotage. For example, it can efficiently use home page access history recorded at friend's and specialist's terminals and reach home pages having good content in a short time.

Specifically, at each user's terminal 20, retaining software that retains the accessed home page history in one's own user's terminal 20 is embedded in the browser. Each user accumulates the various accessed home page history in retaining software through user's own terminal 20 use. Then, when there was a demand of history information from one user's terminal 20, it transmits history information kept in the browser of the other user's terminal 20 to the former. The transmitted history information is displayed in the browser screen 10 of the former user's terminal 20. The user chooses one of the home pages in the received history information. From that, at the user's terminal 20, the CPU of said user's terminal accesses the chosen home page by referring to the URL.

In the preferred embodiment shown in the figure, the retaining software retains URL history information of accessed home pages in connection with the genre information, personal names, keywords, and other collateral information characterizing said home page (step 35). Moreover, when displaying history information in the browser or small window of the user's terminal, collateral information related to said history information is also displayed.

In this manner, the information kept in the other user's terminal is transmitted to the user's terminal and displayed in the area where the buttons for indicating a work are arranged 12, and the user is to choose one of the home pages. At that time, genre information, personal names, keywords, and other collateral information are helpful when choosing appropriate home page.

Secondly, a detailed explanation of the shown embodiment of the browser screen display system related to the second aspect of the present invention is made in the following.

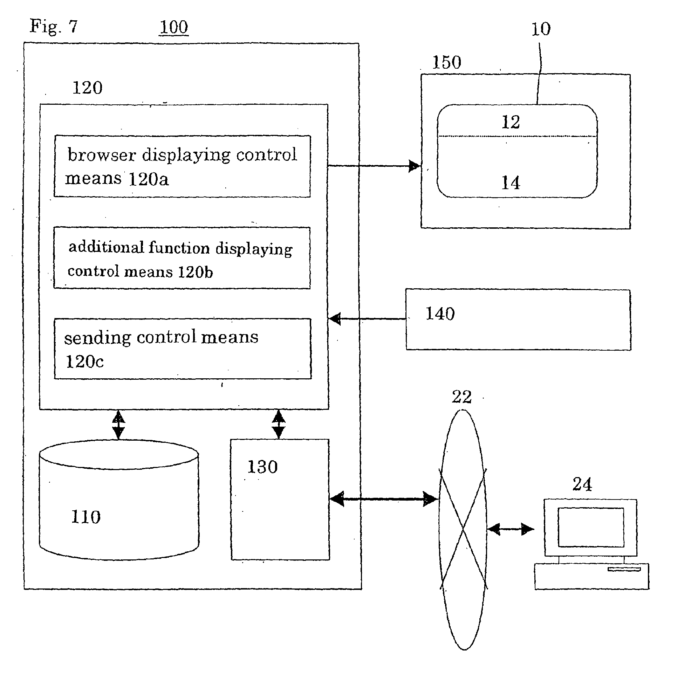

Figure 7 is a block diagram showing an embodiment of the browser screen display system related to the second aspect of the present invention.

The browser screen display system 100 of the present invention comprises a memory 110 that records browser display software, CPU 120, a communications protocol means 130, external input device 140 such as a keyboard, and a monitor 150.

Inside CPU 120, a browser displaying control means 120a and an additional function displaying control means 120b are set up.

A memory 110 in the computer records display software that executes the method for displaying browser screen of the present invention in the browser. The browser displaying control means 120a inside CPU 120 brings out the browser display software from the memory 110 and displays at least the area 12 including, e.g., a menu bar and a tool bar where the buttons for indicating a work are arranged and the main window 14 on a monitor screen 10 by following said browser display software. The additional function displaying control means 120b inside CPU 120 that displays the additional function buttons 12a and/or the small area 12b (see Figure 2), that differ in content with what is to be displayed in the browser, in the area where the buttons for indicating a work are arranged 12, in other words, the place where is always seen on the browser screen 10. In this manner, it enhances operationality and utilization rate.

In the preferred embodiment shown in the figure, when the additional function software is activated at the user's terminal 20, it is to follow the program embedded in said additional function software and transmit the user's response to a specified monitoring server 24 connected through the communication line 22.

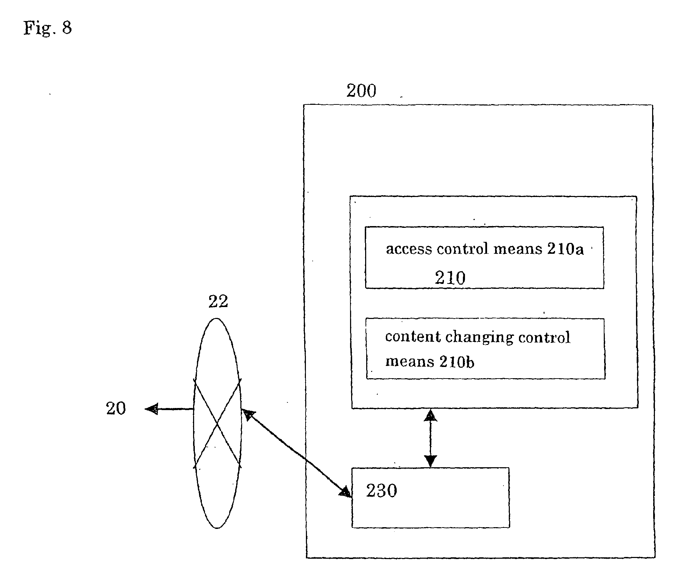

In the embodiment shown in Figure 8, the content displayed by the additional function software is to be changed by the monitoring server 24 periodically or randomly access to the user's terminal 20 through the communication line. This CPU 210 at the monitoring server 24, therefore, is provided with an access control means 210a that controls to periodically or randomly access to specific or all user's terminals 20, and a content changing control means 210b that change the content displayed by the additional function software at accessed user's terminal 20. Reference number 230 is a communications protocol means, but is omitted in the following embodiment.

An explanation of an applied example of the browser screen display system of the present invention used as the home page evaluation system is made in the following.

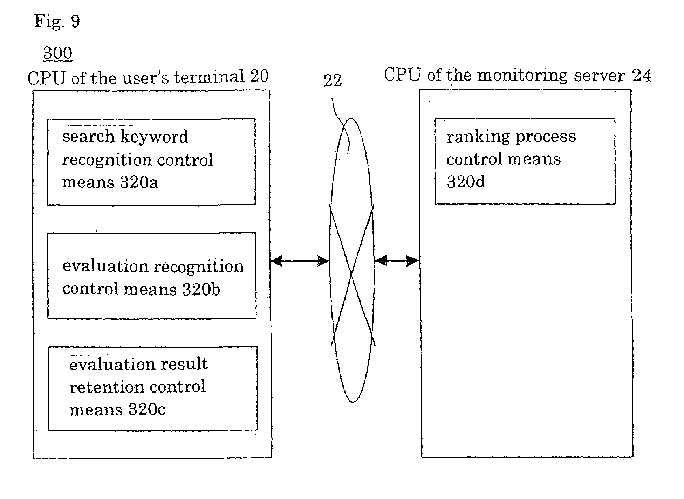

Figure 9 is a block diagram of the browser screen display system of the present invention applied to the home page evaluation system.

The home page evaluation system 300 comprises a search keyword recognition control means 320a, an evaluation recognition control means 320b, an evaluation result retention control means 320c, and a ranking process control means 320d.

The search keyword recognition control means 320a, when the user inputs a word in the small area 12b provided in the area where the buttons for indicating a work are arranged 12 at each user's terminal 20, recognizes the inputted word as a search keyword that characterizes a home page. The evaluation recognition control means 320b recognizes a click on the additional function button 12a, for example "circle (meaning good)", "triangle (meaning neither good nor bad)", and "bad mark (meaning bad)" buttons, as an evaluation of the accessed said home page. Of course, the function button 12a can be in other forms, for example input the satisfaction level in figures or click on a part of the bar graph to show the satisfaction level. The function button 12a includes such concept.

An evaluation result retention control means 320c links and retains the evaluation result in the evaluation software embedded in the browser in connection with the keyword inputted in the small area 12b and transmits the evaluation result to the monitoring server. This evaluation result is constructed so that it can be automatically transmitted to the monitoring server 24 or can have the monitoring server 24 collect. The characteristic of the present embodiment is that it can relate evaluation of each home page to a keyword. A statistical process or ranking of a home page can be done by keyword unit, or by group unit of a number of similar or same concept keywords.

The ranking process control means 320d set up in the CPU of the monitoring server 24 releases a ranking or statistics processes, for example by keyword, the evaluation result automatically transmitted from each user's terminal 20 through the communication line 22 or collected by the monitoring server periodically or randomly access to the user's terminal 20. The present embodiment decides whether the home page is good or bad by compiling the evaluation results of the users who actually saw the home page; therefore, its reliability is enhanced.

An explanation of an applied example of the browser screen display system of the present invention used as the home page advertisement system is made in the following.

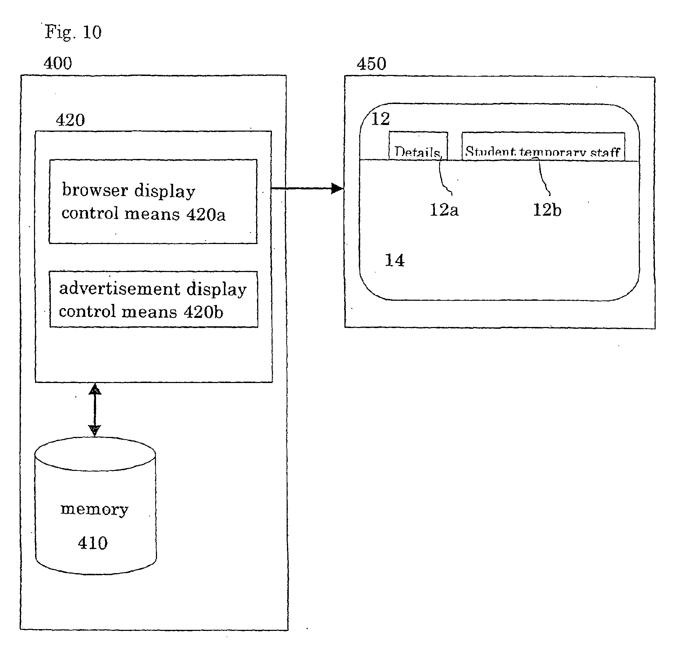

Figure 10 is a block diagram of the browser screen display system of the present invention applied to the home page advertisement system. The home page advertisement system 400, schematically, comprises a memory 410, CPU 420, and a monitor 450. The memory 410 records software that displays specific advertisement, for example characters, still picture, moving picture, telop in the small area 12b of the area where the buttons for indicating work are arranged 12. CPU 420 has the browser display control means 420a that forms browser screen made up of the area where the buttons for indicating work are arranged 12 and the main window 14, the advertisement display control means 420b that forms the small area 12b as an advertisement space in the area where the buttons for indicating work are arranged 12 and displays advertisement by following the advertisement display software recorded in the memory 410 set up.

In the preferred embodiment shown in the figure, the function button 12a is assigned as a "details" button to obtain more detailed information, in a case the user gets interested in the content of the advertisement displayed in the small area 12b. The content of the advertisement can be, as mentioned before, changed or updated by periodical or random access from the monitoring server 24, for example.

An explanation of an applied example of the browser screen display system of the present invention used as the home page search system is made in the following.

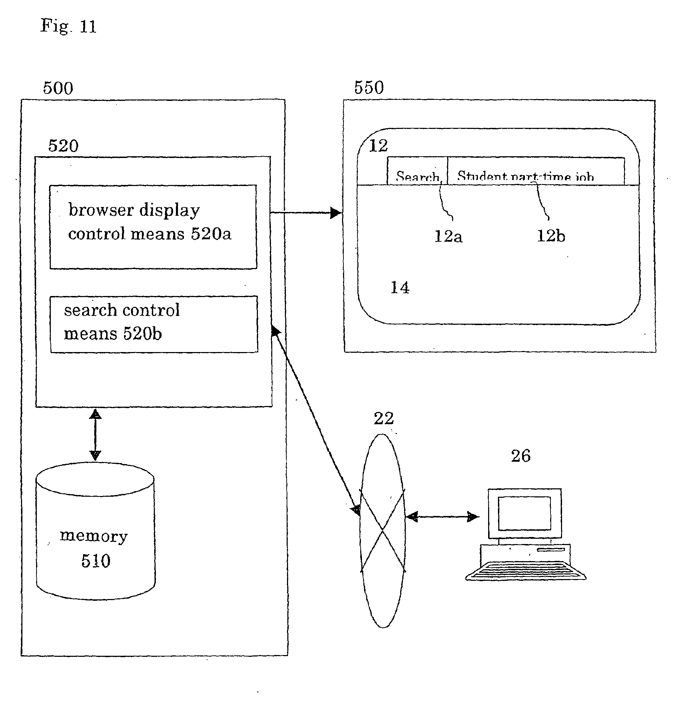

Figure 11 is a block diagram of the browser screen display system of the present invention applied to the home page search system.

The home page reference system 500, schematically, comprises a memory 510, CPU 520, and a monitor 550. The memory 510 recognizes words inputted in the small area 12b of the area where the buttons for indicating work are arranged 12 by the user as a search keyword, and records search software that includes a program which recognizes a click on the function button 12a to execute search. CPU 520 has a browser display control means 520a that forms browser screen made up of the area where the buttons for indicating work are arranged 12 and the main window 14, a search control means 520b that forms the area where the buttons for indicating work are arranged 12 and the small area 12b and executes search by following the search software recorded in the memory 510 set up.

The search control means 520b recognizes the word inputted in the small area 12b as the search keyword, transmits it to the search server 26 through the communication line 22, and executes search. Search results are returned to the user's terminal 20 by the communication line 22 and displayed in the area where the buttons for indicating work are arranged 12 of the browser screen 10. In a case the search result exceeds displayable number of lines, it is displayed by setting the pull-down menu 13 or a portal site.

An explanation of an applied example of the browser screen display system of the present invention with the instant lottery formation function added is made in the following.

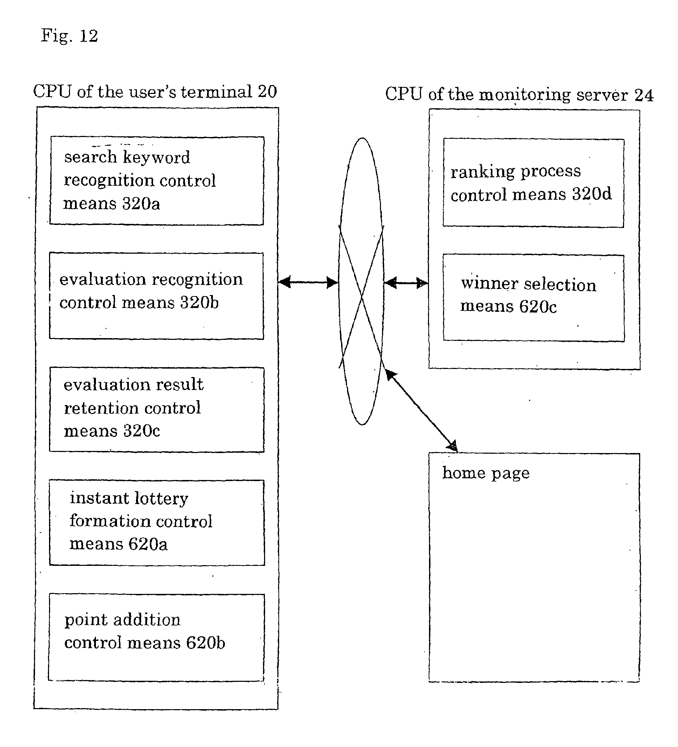

Figure 12 is a block diagram of an embodiment that has an instant lottery related to the present invention added to the home page evaluation system of Figure 9. The components that are the same as the components in Figure 9 have the same reference numbers and those detailed explanation are omitted.

The characteristic of the present embodiment is that, in the CPU of each user's terminal, it includes an instant lottery formation control means 620a added to the search keyword recognition control means 320a, the evaluation recognition control means 320b, and the evaluation result retention control means 320c. The instant lottery formation control means 620a forms message window in the area where the buttons indicating a work are arranged 12. In the preferred embodiment shown in Figure 2, the small area 12b is used both as the message window. In other words, on the moment of winning, the small area 12b display changes to a message announcing the winning. In this manner, the winning of the sweepstake is announced on the moment when the user votes. With the attraction of the instant lottery, users will voluntarily vote for something that has no merit in itself.

In the preferred embodiment shown, CPU of the monitoring server 24 has a winner selection means 620c that recognizes when the user votes and selects a winner and, in addition, a point addition control means 620b that adds points of voting records. When the point reaches a certain rumber, present a gift or provide a premium to make users want to vote, such as increasing a chance of winning.

An explanation of an applied example of the browser screen display system of the present invention used as the home page reference system is made in the following.

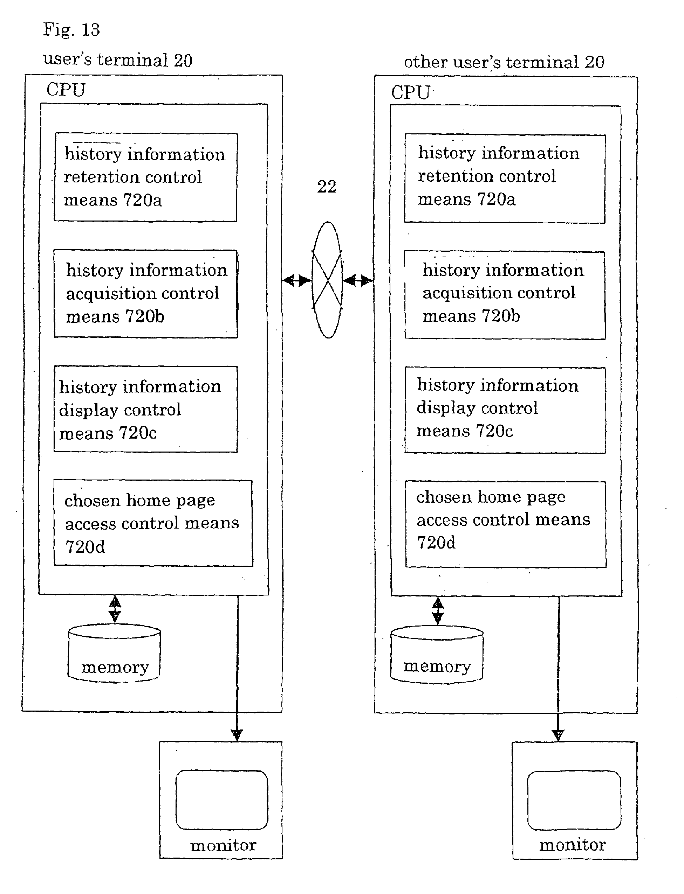

Figure 13 is a block diagram of the browser screen display system of the present invention applied to the home page reference system.

CPU of each user's terminal 20 has a history information retention control means 720a, a history information acquisition control means 720b, a history information display control means 720c, and a chosen home page access control means 720d set up.

The history information retention control means 720a follows the retention software embedded in the browser of user's terminal and retains a history information of the accessed home pages in the browser of user's own terminal. Figure 14 is a tree view of history information retained at the user's terminal, and the URL shows the address information. In this manner, each user's terminal has information on various URLs. The user of the user's terminal knows all kinds of friends or specialists, for example a friend who is knowledgeable in literature, a friend who is knowledgeable in computer, or a friend who plays music. With that, access their user's terminals and use their history information. From this, it is capable of accessing home pages (of course, they are home pages with significant in content) used by persons who are knowledgeable in each genre.

The history information acquisition control means 720b transmits a history information kept in the browser of other user's terminal 20 to the user's terminal 20 through the communication line 22 when the user's terminal 20 demands history information of other user's terminal 20. The history information display control means 720c displays the transmitted history information in the area where the buttons for indicating a work are arranged 12 of the user's terminal 20 and have user choose one of home pages. In a case there is plenty of information to be displayed, it is displayed in the small window / pull-down menu 13 as shown in the Figure 14.

The chosen home page access control means 720d accesses the chosen home page by referring to the URL of said home page. From this, it has an advantage that it can reach a home page having a good content in a short time as an access history of home pages recorded in other users' terminals 20 as a pilotage.

In the preferred embodiment shown in the figure, the retaining software embedded in the browser retains URL history of accessed home pages together with genre information, personal names, keywords, and other collateral information 12c characterizing said home page. Moreover, when displaying history information in the browser of the user's terminal 20, collateral information 12c related to said history information is also displayed. From this, it is easy for the user to search appropriate home pages.

The third aspect of the present invention relates to the recorded medium that can read computer with a recorded program to execute the method for displaying browser screen related to the first aspect of the present invention.

The present invention is mentioned based on the preferred embodiment shown in the figure, but it is capable of amendments or changes without departing from the spirit of the present invention.

## Claims

1. A method for displaying browser screen **characterized in that** it comprises,
a step for loading software including a program for displaying an area including, e.g., a menu bar and a tool bar where buttons for indicating a work are arranged and a main window on a computer, and
a step for embedding in the browser additional function software including a program that displays additional function button(s) and/or small area(s) different from the contents to be displayed by a browser in said area.

2. A method for displaying browser screen described in claim 1 **characterized in that** when said additional function software is activated at the user's terminal, it comprises a step to follow the program embedded in the additional function software and transmit user's response to a specified monitoring server.

3. A method for displaying browser screen described in claim 1 or 2 **characterized in that** it comprises a step to change the content displayed by means of said additional function software by having said monitoring server periodically or randomly access to the user's terminal, or the user's terminal access to the monitoring server.

4. A method for displaying browser screen described in one of claims 1∼3, wherein said additional function button(s) and/or small area(s) are to compile the evaluation results by the users who have actually seen the home page, and is **characterized in that** it comprises,
a step to embed into browser an evaluation software that can display small area to input words that would be keywords for search to describe characteristics of the home page and present home page evaluation means in the area where the buttons for indicating work are arranged or in a small window brought up on the computer,
a step to input words that would be said search keywords in the browser or the small area of said small window,
a step to evaluate present home page using said home page evaluation means, and
a step to retain the evaluation of the home page in connection with the keyword concerned in the evaluation software embedded in the browser, and transmit the same to the monitoring server.

5. A method for displaying browser screen described in one of claims 1∼3 **characterized in that** said additional function button(s) and/or small area(s) is designed to display advertisement at the user's terminal.

6. A method for displaying browser screen described in one of claims 1 or 2 **characterized in that** said additional function button(s) and/or the small area(s) is for the search engine to search for various home pages.

7. A method for displaying browser screen described in claim 4 **characterized in that** it comprises,
a step to embed in said browser an announcement software that displays message to announce winning of the sweepstake on the moment when the user votes in the browser or a small window,
a step to automatically select winner when it is recognized that the user's terminal has done evaluating the home page, and
a step to transmit a signal to the user who has won and displays so on said user's terminal whereby the user is encouraged to voluntarily vote.

8. A method for displaying browser screen described in claim 1, **characterized in that** it comprises,
a step to embed in a browser a retaining software that can retain a history of accessed home pages in the browser of user's own terminal,
a step to transmit a history information kept in the browser of other user's terminal to the user's terminal through the communication lines when the user demands the history information of other user's terminal,
a step to display the transmitted history information in the area where the buttons for indicating a work are arranged or the small window of the user's terminal and have the user choose one of home pages, and
a step to access the chosen home page by referring to the URL,
whereby it reaches a home page having a good content in a short time with using access history information of home pages recorded in other users' terminals as a pilotage.

9. A method for displaying browser screen described in claim 8 **characterized in that** said retaining software can retain URL history of accessed home pages together with genre information, personal names, keywords, and other collateral information characterizing said home page, moreover, when displaying the history information in the browser or small window of the user's terminal, the collateral information related to said history information is also displayed.

10. A browser screen display system that views home pages of various Webs through the communication lines **characterized in that** it comprises
a memory that records browser display software,
a browser displaying control means inside CPU that brings out the browser display software from said memory and displays at least an area including, e.g., a menu bar and a tool bar where buttons for indicating a work are arranged and a main window on a monitor screen by following said browser display software, and
an additional function displaying means inside CPU that displays additional function button(s) and/or small area(s), that differ(s) in content with what is to be displayed by the browser, in said area where the buttons for indicating a work are arranged.

11. A system for displaying browser screen described in claim 10 **characterized in that** when said additional function software is activated at the user's terminal, it is constructed to follow the program embedded in said additional function software and transmit the user's response to a specified monitoring server.

12. A system for displaying browser screen described in claim 10 or 11 **characterized in that** the content displayed by said additional function software is to be changed by having the monitoring server periodically or randomly access to said user's terminal through the communication lines, or by having the user's terminal access to the monitoring server.

13. A system for displaying browser screen described in one of the claims 10∼12 **characterized in that** it further comprises search keyword recognition control means that recognize(s) an input in the small area as a search keyword to show characteristics of the home page, evaluation recognition means that recognize(s) a click on the additional function button as an evaluation on said accessed home page, evaluation result retention means that retain(s) search result in connection with keyword in the evaluation software embedded in the browser and also transmit(s) the search result to the monitoring server, and ranking process means that compile(s) the evaluation results retained by the evaluation result retention means and releases a ranking or statistical processes by the keywords, whereby whether the home page is good or bad is decided from the evaluation results of the users who actually saw the home page.

14. A system for displaying browser screen described in one of the claims 10∼13 **characterized in that** it further comprises advertisement presentation means that present(s) an advertisement to the user in said small area.

15. A system for displaying browser screen described in the claim 10 or 12 **characterized in that** it further comprises search engine assignment means in the additional function buttons and/or the small area that assign(s) search engine to search various home pages.

16. A system for displaying browser screen described in claim 13 **characterized in that** it further comprises instant lottery formation means that forms message window(s) in said area where the buttons indicating a work are arranged or the small window and announce(s) winning of the sweepstake on the moment when the user votes, whereby it induces the user to voluntarily vote with an attraction to the instant lottery.

17. A system for displaying browser screen described in claim 10 **characterized in that** it further comprises history information retention means that follow(s) the retention software embedded in the user's terminal and retain(s) a history of accessed home pages in the browser of user's own terminal, history information acquisition means that transmit(s) the history information kept in the browser of other user's terminal to the user's terminal through the communication line(s) when the user demands the history information of other user's terminal, history information display means that display(s) the transmitted history information in the area where the buttons for indicating a work are arranged or the small window of the user's terminal and have(has) the user choose one of home pages, and chosen home page access means that accesses the chosen home page by referring to the URL, whereby it reaches a home page having a good content in a short time with using the access history information of home pages recorded in other users' terminals as a pilotage.

18. A system for displaying browser screen described in claim 17 **characterized in that** the retention software can retain URL history of accessed home pages together with genre information, personal names, keywords, and other collateral information characterizing said home page, moreover, when the displaying history information in the browser or small window of the user's terminal, the collateral information related to said history information is also displayed.

19. A recorded medium that can be red by computer with a recorded program to execute the method for displaying browser screen mentioned in the claims 1∼9.
